(19) **Europäisches Patentamt**

**European Patent Office**

**Office européen des brevets**

(11) Veröffentlichungsnummer: **0 264 741**
**A2**

(12) **EUROPÄISCHE PATENTANMELDUNG**

(21) Anmeldenummer: **87114781.5**

(22) Anmeldetag: **09.10.87**

(51) Int. Cl.⁴: **B32B 5/32** , B32B 27/30

(30) Priorität: **15.10.86 DE 3635049**

(43) Veröffentlichungstag der Anmeldung:
**27.04.88 Patentblatt 88/17**

(84) Benannte Vertragsstaaten:
**AT BE CH DE ES FR GB GR IT LI LU NL SE**

(71) Anmelder: **Pegulan-Werke AG**
**Foltzring 35**
**D-6710 Frankenthal/Pfalz(DE)**

(72) Erfinder: **Gruss, Gerolf, Dipl.-Ing.**
**Karolinenstrasse 54**
**D-6730 Neustadt a. d. W.(DE)**

(54) **Verfahren zur Herstellung einer tiefziehfähigen Schaumverbundfolie.**

㊼ Es wird ein Verfahren zur Herstellung einer tiefziehfähigen Schaumverbundfolie, die insbesondere
zur Thermokaschierung bestimmt ist, bestehend aus
einer kompakten Deckschicht aus thermoplastischem
Kunststoff, einem aufgeschäumten Kunststoffteil und
einem Kunststoffilm, beschrieben.
Der ungeschäumte Kunststoffilm besteht aus einem
Polyvinylchlorid-Plastisol, dem ein Stabilisator mit inhibierender Wirkung oder ein Inhibitor zugesetzt ist.

**EP 0 264 741 A2**

## Verfahren zur Herstellung einer tiefziehfähigen Schaumverbundfolie

Die Erfindung betrifft ein Verfahren zur Herstellung einer tiefziehfähigen Schaumverbundfolie, bestehend aus einer kompakten Deckschicht aus thermoplastischem Kunststoff, aus einem aufgeschäumten Kunststoffteil und unterseitig aus einem ungeschäumten Kunststoffilm, wobei zuerst auf ein Trägermaterial ein Plastisol aufgebracht wird, das darauf bei höherer Temperatur angeliert wird, worauf auf das angelierte Plastisol ein weiteres aufschäumbares Plastisol aufgebracht wird, in das eine Deckfolie eingebettet wird, und darauf das gesamte Schichtgebilde unter Aufschäumen der Kunststoffschaumschicht erwärmt wird, worauf die Schaumverbundfolie abgekühlt, von dem Trägermaterial abgezogen und aufgewickelt wird.

Derartige tiefziehfähige, in ihrem Griff und Aussehen lederartigen Schichtmaterialien aus verschiedenen Kunststoffen besitzen ein großes Anwendungsgebiet und sind von erheblicher technischer Bedeutung. Vor allem deswegen, weil sie neben den technischen wertvollen Eigenschaften der Kunststoffe, z. B. große Festigkeit, Alterungsbeständigkeit, Abriebfestigkeit usw. das Aussehen von Leder besitzen. Deshalb finden sie eine große Verwendung als Kunstleder, vor allem als Verkleidungsmaterial, z. B. bei der Automobilinnenverkleidung, in der Täschnerindustrie oder als Basismaterial für Koffer, Taschen usw. Insbesondere sind dabei die Anwendungsgebiete bevorzugt, bei denen eine derartige Verbundfolie auf ein Basismaterial thermokaschiert werden soll.

In der Praxis hat sich nun immer wieder herausgestellt, daß bei der Kaschierung solcher Schichtmaterialien auf das Basismaterial Schwierigkeiten auftreten. So kann es passieren, daß bei einer Vakuumkaschierung eine Evakuierung der Schaumzellen der Kunststoffschicht erfolgt. Auch kann es geschehen, daß sich bei der Thermokaschierung zwischen dem Schichtmaterial und dem Basismaterial eine gute Haftung nicht erzielen läßt.

Der Erfindung liegt nun die Aufgabe zugrunde, eine Schaumverbundfolie der eingangs genannten Art zu schaffen, bei der die vorher angegebenen Nachteile nicht auftreten.

Diese Aufgabe wird erfindungsgemäß dadurch gelöst, daß auf das Trägermaterial als Plastisol ein Polyvinylchlorid-Plastisol aufgebracht wird, dem ein Stabilisator mit inhibierender Wirkung oder ein Inhibitor zugesetzt ist, und auf das angelierte Plastisol mindestens eine aufschäumbare Kunststoffschicht aufgebracht wird, die nach dem Aufschäumen eine Dichte von 0,1 bis 0,6 g/l, insbesondere von 0,15 bis 0,3 g/l besitzt.

Der bei der fertigen Schaumverbundfolie auf der Unterseite vorhandene Kompaktstrich in Form eines ungeschäumten Kunststoffilmes besitzt dabei bevorzugterweise ein Flächengewicht von 100 bis 400 g/m².

Die kompakte Deckschicht besteht z. B. aus polymeren Polyvinylchlorid und Weichmacher und/oder Acryl-Butadien-Styrol und/oder Nitrilkautschuk.

Die kompakte Deckschicht kann dabei sowohl glatt als auch narbenartig geprägt sein.

In einer bevorzugten Ausführungsform der Erfindung wird als kompakte Deckschicht ein Regeneratmaterial verwendet. Der Einsatz von Regeneratmaterial ergibt einen kostenmäßigen Vorteil für die Herstellung der Schaumverbundfolie und ist positiv in bezug auf den Umweltschutz zu bewerten.

Als thermoplastischer Kunststoff für die Kunststoffschaumschicht werden insbesondere Schaumpasten aus polymerem Polyvinylchlorid, zusammen mit Dioctylphthalat (DOP) als Weichmacher eingesetzt.

Da sich in der Praxis immer wieder gezeigt hat, daß bei einer Kunststoffschicht aus PVC-Schaum, versehen mit einem Kompaktstrich auf der Unterseite, nach einer Kaschierung auf ein Trägerteil die Haftfestigkeit zwischen der Schaumschicht und dem Kompaktstrich nicht ganz ausreichend sein kann, so daß es in diesem Bereich zu Delaminierungen kommt, wird erfindungsgemäß dem aus PVC-Plastisol bestehenden, aufgebrachten Kompaktstrich, ein Stabilisator mit inhibierender Wirkung oder ein Inhibitor zugesetzt.

Als Stabilisatoren bzw. Inhibitoren sind insbesondere Butylzinnmercaptid, Trimellithsäureanhydrid, Diphenylthioharnstoff oder Benzotriazol zugesetzt.

Zusätzlich enthält das Polyvinyl-Plastisol als Haftprimer noch ein Harz und/oder einen Weichmacher mit freien Hydroxylgruppen.

Als vorteilhaft hat es sich herausgestellt, wenn die Schaumverbundfolie aus zwei oder sogar noch mehr Kunststoffschaumschichten mit unterschiedlichen Dichten aufgebaut ist.

In der Praxis hat sich nämlich herausgestellt, daß beim Vorhandensein von Kunststoffschaumschichten mit unterschiedlicher Dichte bei der Herstellung der Schaumverbundfolie bei einem hohen "Softfeeling" negative Nebeneffekte, wie zu geringe Haftung der Deckschicht mit der Kunststoffschicht oder Aufwölbungen der Schaumverbundfolie bei Verdichtung des Materials (beim Kaschierungsprozeß) verhindert werden können (Wulstbildung).

Generell kann man sagen, daß die Verarbeitung eines solchen Schichtgebildes aus Schaumschichten unterschiedlicher Dichte wesentlich unproblematischer ist als wenn ein Schichtgebilde mit einer Kunststoffschicht einheitlicher Dichte verwendet wird.

Der auf die Kunststoffschicht unterseitig aufgebrachte Kompaktstrich bewerkstelligt, daß z. B. bei einer anschließenden Vakuumkaschierung der Schaumverbundfolie auf ein Trägerteil die Schaumzellen nicht zusammenfallen. Dadurch ist es z. B. möglich, PVC-Schäume, die eine Kunststoffschaumschicht mit einer niedrigen Dichte von 0,15 bis 0,30 g/l beim Verschäumen ergeben, für die aufzuschäumende Kunststoffschicht einzusetzen.

Weiter zeigte sich hinsichtlich der Wulstbildung, daß ein offenzelliger Schaum (für die Kunststoffschaumschicht) einem geschlossenzelligen Schaum überlegen ist.

Die dem PVC-Plastisol zugesetzten Stabilisatoren bzw. Inhibitoren bewirken, daß beim Aufschäumen der Kunststoffschaumschicht der Schaum im Grenzbereich zu dem Kompaktstrich in seinem Schaumgrad gebremst wird. Dadurch wird eine erhöhte Schaumdichte des Schaumes der Kunststoffschaumschicht im Grenzbereich zwischen Schaumschicht und Kompaktstrich erhalten, wodurch die Scherfestigkeit und die Schälfestigkeit zwischen der Kunststoffschaumschicht und dem Kompaktstrich erhöht werden. Dadurch wird dann bei einem nachfolgenden Thermokaschierungsprozeß ein Delaminieren von der Schaumschicht der Verbundfolie und von dem Kompaktstrich verhindert.

Um bei der späteren Kaschierung eine gleichmäßige und sichere Haftung der Schaumverbundfolie auf dem Trägerteil zu erzielen, hat es sich in der Praxis als vorteilhaft erwiesen, den Kompaktstrich aus PVC-Plastisol noch einen Haftprimer zuzusetzen. Dieser Haftprimer geht später mit dem hitzeaktivierbaren Kleber des Basismaterials (Trägerteil), z. B. auf der Basis Polyurethan, eine chemische Reaktion ein. Als Haftprimer wird insbesondere dem Kompaktstrich ein Harz oder ein Weichmacher zugesetzt, der beim Aufbringen der Verbundfolie auf den zu kaschierenden Gegenstand mit dem hitzeaktivierbaren Kleber des Basismaterials reagiert, wobei dann zwischen den freien Hydroxylgruppen des Harzes oder des Weichmachers und den Isocyanatgruppen des Klebers des Basismaterials beim Thermokaschierprozeß eine Vernetzungsreaktion erfolgt. Hierdurch wird eine gute Haftung der Verbundfolie mit dem zu kaschierenden Basismaterial erreicht.

Als geeignete Haftprimer kommen dabei polymere Acrylate, an PVC angelagerte Polyacetate (Mischpolymerisate aus der Copolymerisation der Maleinsäure mit Polyvinylchlorid) in Frage.

Als Kleber auf dem Basismaterial werden vor allem hitzeaktivierbare Polyurethankleber eingesetzt.

Die Herstellung eines thermokaschierten Produktes erfolgt in der Weise, daß ein Basismaterial (Trägermaterial), welches im Spritzgußverfahren, nach dem Tiefziehverfahren oder auch durch Pressen von Holzschliffmaterial mit einem Binder hergestellt wird, mit einem hitzeaktivierbaren Kleber ausgerüstet wird. Gleichzeitig wird die Schaumverbundfolie durch Aufheizen mit Strahlern oder im Wärmekanal - ebenso ist eine direkte Kontaktwärme denkbar - aufgeheizt und mittels Vakuum und/ oder einem Pressvorgang auf das Basismaterial aufkaschiert. Bei dem Kaschierungungsvorgang wird dabei durch die gespeicherte Wärmekapazität in der Schaumverbundfolie der Kleber des Trägerteils aktiviert und zu einer Vernetzungsreaktion veranlaßt, wodurch das Basismaterial und die Schaumverbundfolie fest miteinander verbunden werden.

Die Erfindung wird im folgenden anhand eines Anführungsbeispiels noch näher erläutert:

Mit Hilfe eines Rollcoaters wird auf ein Trägerpapier als Kompaktstrich ein Plastisol aus 60 Teile Polyvinylchlorid und 40 Teilen Dioctylphthalat (DOP) als Weichmacher gleichmäßig aufgestrichen. Diesem PVC-Plastisol sind noch 3 Teile Butylzinnmercaptid als Stabilisator zugesetzt. Das Flächengewicht des aufgebrachten Plastisols beträgt etwa 200 g/m².

Das Trägerpapier mit dem aufgestrichenen Plastisol wird während eines Zeitraumes von 1 1/2 bis 2 Minuten durch einen Temperaturkanal, der eine Temperatur von 150 bis 160 °C aufweist, hindurchgeführt. Dabei erfolgt ein Angelieren des Plastisols.

Darauf wird auf das angelierte Plastisol eine Polyvinylchloridschaumpaste aufgestrichen, bestehend aus 60 Teilen Polyvinylchlorid und 40 Teilen Dioctylphthalat (DOP) als Weichmacher. Zusätzlich enthält diese PVC-Schaumpaste noch 3 Teile einer Barium-Cadmiumverbindung als Stabilisator, Azodicarbonamid als Treibmittel und 1 Teil Antimontrioxid als Flammhemmungsmittel. Die Dichte dieser PVC-Schaumpaste beträgt 1,3 g/l, bei einem Flächengewicht von 500 g/m² (ungeschäumt).

Auf die obere freie Seite dieser Schaumpaste wird eine 0,2 mm dicke geprägte Deckfolie, bestehend aus 50 Teilen Polyvinylchlorid mit einem kW-Wert 70, 25 Teilen Acryl-Butadien-Styrol, 10 Teilen Nitrilkautschuk, 15 Teilen Dioctylphthalat (DOP) als Weichmacher und 3 Teilen Butylmercaptid als Stabilisator aufgebracht. Die gesamte Schaumverbundfolie wird darauf durch einen zweiten Temperaturkanal geführt und während eines Zeitraumes von 5 Minuten bei 200 bis 220 °C erwärmt. Dabei erfolgt ein Aufschäumen der Schaumpaste. Die ausgebildete Kunststoffschaumschicht weist eine Dichte von 0,4 g/l auf, bei einer Dicke von 1,0 mm.

Nachdem die Schaumverbundfolie auf Raumtemperatur abgekühlt ist, wird sie von dem Trägerpapier abgenommen und auf die gewünschte Dimensionen konfektioniert.

Die mit der Erfindung erzielten Vorteile bestehen insbesondere darin, daß bei einer anschließenden Thermokaschierung die Schaumverbundfolie über den Kompaktstrich fest mit dem zu kaschierenden Basismaterial, auf das vorher ein Kleber aufgebracht wurde, verbunden werden kann.

Die erfindungsgemäße Schaumverbundfolie. bringt außerdem den Vorteil mit sich, daß bei der Kaschierung das "Wärmeangebot" an das mit einer Kleber ausgerüstete Basismaterial so groß ist, daß dieses Basismaterial vor dem Produktionsvorgang nicht mehr aufwendig erwärmt werden muß.

Sofern eine Vakuumkaschierung erfolgt, tritt ein Zusammenfallen der Schaumzellen der aufgeschäumten Kunststoffschaumschicht nicht ein.

Die erfindungsgemäß hergestellte Schaumverbundfolie wird bevorzugt bei einer nachfolgenden Thermokaschierung als Kaschierungsmaterial auf ein Basismaterial. eingesetzt, wobei sie besonders bei der Herstelung von Kraftfahrzeug-Innenverkleidungen Verwendung findet.

## Ansprüche

1. Verfahren zur Herstellung einer tiefziehfähigen Schaumverbundfolie, bestehend aus einer kompakten Deckschicht aus thermoplastischem Kunststoff, aus einem aufgeschäumten Kunststoffteil und unterseitig aus einem ungeschäumten Kunststoffilm, wobei zuerst auf ein Trägermaterial ein Plastisol aufgebracht wird, das darauf bei höherer Temperatur angeliert .wird, worauf auf das angelierte Plastisol ein weiteres aufschäumbares Plastisol aufgebracht wird, in das eine Deckfolie eingebettet wird, und darauf das gesamte Schichtgebilde erwärmt wird, unter Aufschäumen der Kunststoffschaumschicht, worauf die Schaumverbundfolie abgekühlt, von dem Trägermaterial abgezogen und aufgewickelt wird, dadurch gekennzeichnet, daß auf das Trägermaterial als Plastisol ein Polyvinylchlorid-Plastisol aufgebracht wird, dem ein Stabilisator mit inhibierender Wirkung oder ein Inhibitor zugesetzt ist, und auf das angelierte Plastisol mindestens eine aufschäumbare Kunststoffschicht aufgebracht wird, die nach dem Aufschäumen eine Dichte von 0,1 bis 0,6 g/l, insbesondere von 0,15 bis 0,3 g/l besitzt.

2. Verfahren nach Anspruch 1, dadurch gekennzeichnet, daß der unterseitige, ungeschäumte Kunststoffilm bei der fertigen Schaumverbundfolie ein Flächengewicht von 100 bis 400 g/m² besitzt.

3. Verfahren nach Anspruch 1 und 2, dadurch gekennzeichnet, daß als kompakte Deckschicht eine Folie aus Regeneratmaterial verwendet wird.

4. Verfahren nach einem oder mehreren der vorhergehenden Ansprüche, dadurch gekennzeichnet, daß dem Polyvinylchlorid-Plastisol für den ungeschäumten Kunststoffilm als Haftprimer noch zusätzlich ein Harz und/oder ein Weichmacher mit freien Hydroxylgruppen zugesetzt ist.

5. Schaumverbundfolie nach einem der Ansprüche 1 bis 4 hergestellt, dadurch gekennzeichnet, daß die Schaumverbundfolie zwei Kunststoffschaumschichten unterschiedlicher Dichten aufweist.

6. Schaumverbundfolie nach einem der Ansprüche 1 bis 4 hergestellt, dadurch gekennzeichnet, daß die aufgeschäumte(n) Kunststoffschaumschicht(en) eine offene Zellstruktur besitzen.

7. Verwendung einer nach einem der Ansprüche 1 bis 4 hergestellten Schaumverbundfolie, dadurch gekennzeichnet, daß die Schaumverbundfolie bei einer nachfolgenden Thermokaschierung als Kaschierungsmaterial auf ein Basismaterial eingesetzt wird.

8. Verwendung einer nach einem der Ansprüche 1 bis 4 hergestellten Schaumverbundfolie, dadurch gekennzeichnet, daß die Schaumverbundfolie zur Herstellung von Kraftfahrzeug-Innenverkleidung eingesetzt wird.